# EUROPÄISCHE PATENTSCHRIFT

(11) **EP 1 563 392 B1**
(45) Veröffentlichungstag und Bekanntmachung des Hinweises auf die Patenterteilung: **31.12.2008**
(21) Anmeldenummer: 03778250.5
(22) Anmeldetag: 04.11.2003
(51) Int. Cl.: G06F 13/40

(54) **SCHNITTSTELLENSCHALTUNG**
INTERFACE CIRCUIT
CIRCUIT D'INTERFACE

(30) Priorität: 22.11.2002 DE 10254615
(43) Veröffentlichungstag der Anmeldung: 17.08.2005
(73) Patentinhaber: Infineon Technologies AG, 81669 München (DE)
(72) Erfinder: BEIT-GROGGER, Andrea, A-8045 Graz (AT); KOROSCHETZ, Helmut, A-8501 Lieboch (AT)
(74) Vertreter: Epping - Hermann - Fischer
(86) Internationale Anmeldenummer: PCT/DE2003/003653
(87) Internationale Veröffentlichungsnummer: WO 2004/049164

(56) Entgegenhaltungen:
- EP-A- 0 887 740
- US-A- 4 929 849
- US-A- 6 055 597

## Beschreibung

Die Erfindung betrifft eine Schnittstellenvorrichtung mit einer ersten Zwischenspeichereinheit und einer zweiten Zwischenspeichereinheit, wobei die erste Zwischenspeichereinheit einer ersten Domäne und die zweite Zwischenspeichereinheit einer zweiten Domäne zugeordnet ist, und wobei die Zwischenspeichereinheiten zur Datenübertragung miteinander verbunden sind.

Schnittstellenvorrichtungen dieser Art werden verwendet, um Daten von einer ersten Domäne zu einer zweiten Domäne zu übertragen. Ein dabei übliches Problem ist, daß die erste und die zweite Domäne mit unterschiedlichen Taktfrequenzen arbeiten. Bei dem Zugriff auf einen Speicher der Schnittstellenvorrichtung tritt daher das Problem auf, daß von den beiden mit unterschiedlichen Taktfrequenzen arbeitenden Domänen Zugriffe auftreten können. Aufgrund der unterschiedlichen Taktfrequenzen kommt es zu Konflikten, weil beispielsweise eine der Domänen Daten schreibt, bevor die andere Domäne zuvor abgelegte Daten gelesen hat.

Eine bekannte Lösung bei geringen Frequenzdifferenzen besteht in der Verwendung sogenannter Synchronisationsregister. Diese sind aber nur dann einsetzbar, wenn der Frequenzunterschied minimal ist.

Eine andere bekannte Lösung ist eine Taktumschaltung zwischen dem Taktsignal der ersten und der zweiten Domäne. Die Schnittstellenvorrichtung kann in so einem Fall also entweder mit der einen oder der anderen Taktfrequenz arbeiten. Eine solche Schnittstellenrealisierung ist aber nicht immer befriedigend. Eine typische Anwendung besteht beispielsweise bei Chipkarten, die sowohl mit kontaktlosen als auch kontaktbehafteten Schnittstellen bestückt sind und in beiden Betriebsarten gleichzeitig verwendet werden sollen. Beispielsweise werden Daten kontaktbehaftet empfangen und kontaktlos gesendet. Eine einwandfreie Funktion ist in diesem Anwendungsfall nicht immer gewährleistet.

Die Veröffentlichung EP-A-0887740 beschreibt eine Schnittstellenvorrichtung mit einer ersten Zwischenspeichereinheit und einer zweiten Zwischenspeichereinheit, wobei die erste Zwischenspeichereinheit einer ersten Domäne und die zweite Zwischenspeichereinheit einer zweiten Domäne zugeordnet ist, und wobei die Zwischenspeichereinheiten zur Datenübertragung miteinander verbunden sind, wobei jede der Zwischenspeichereinheiten zweistufig mit jeweils einem ersten und einem zweiten Speicher ausgeführt ist, wobei die Verbindung zwischen der ersten und der zweiten Zwischenspeichereinheit durch Verbindungen zwischen dem zweiten Speicher der einen Zwischenspeichereinheit und dem ersten Speicher der anderen Zwischenspeichereinheit vorgesehen ist.

Aufgabe der Erfindung ist es daher, eine Schnittstellenvorrichtung anzugeben, die Datenübertragungen zwischen zwei Domänen mit sehr unterschiedlichen Taktfrequenzen ermöglicht.

Diese Aufgabe wird erfindungsgemäß durch eine Schnittstellenvorrichtung der eingangs genannten Art gelöst, die dadurch gekennzeichnet ist, daß jede der Zwischenspeichereinheiten zweistufig mit jeweils einem ersten und einem zweiten Speicher aufgeführt ist, wobei die Verbindung zwischen der ersten und der zweiten Speichereinheit durch Verbindungen zwischen dem zweiten Speicher der einen Zwischenspeichereinheit und dem ersten Speicher der anderen Zwischenspeichereinheit vorgesehen ist, und wobei Daten von einer Domäne in den Speicher der ersten Stufe geschrieben werden und dann in den zweiten Speicher geschrieben werden, wenn kein Übertragungsvorgang zwischen den Domänen mehr anhängig ist.

Bei der erfindungsgemäßen Schnittstellenvorrichtung steht also in jeder Zwischenspeichereinheit ein eigener Speicher zur Verfügung, um die Daten der ihr zugeordneten Domäne zu empfangen. Andererseits ist ein Speicher vorgesehen, in dem Daten so lange gespeichert sind, bis eine Übertragung erfolgreich abgeschlossen ist. Der Vorteil der erfindungsgemäßen Ausgestaltung besteht darin, daß Daten in den zweiten Speicher nur dann geschrieben werden können, wenn die sich dort befindlichen Daten nicht mehr benötigt werden, weil sie bereits zu der anderen Domänen übertragen worden sind.

In einer bevorzugten Ausführung der Erfindung ist jeder Zwischenspeichereinheit eine Synchronisationsvorrichtung zugeordnet, die bei Änderung des ersten Speichers ein Synchronisationssignal an die andere Synchronisationsrichtung sendet und bei Empfang eines Bestätigungssignals ein Schreiben in den zweiten Speicher freigibt, und die bei Erhalt eines Synchronisationssignals von der anderen Synchronisationsvorrichtung ein Bestätigungssignal sendet, wenn eine Taktsignalsynchronisation erfolgt ist.

Eine Datensignalsynchronisation ist erfolgt, wenn auch bei der bestätigenden Synchronisationseinheit ein Taktimpuls registriert wurde.

Durch das Senden eines Synchronisationssignals, also einer Aufforderung zur Synchronisation, in Verbindung mit dem Bestätigungssignal ist eine einfache Möglichkeit gegeben, wie sichergestellt werden kann, daß kein Übertragungsvorgang zwischen den Domänen anhängig ist.

Weitere vorteilhafte Ausgestaltungen der Erfindung sind in den Unteransprüchen angegeben.

Die Erfindung wird nachfolgend anhand eines Ausführungsbeispiels näher erläutert. Es zeigt:
- Figur 1: eine schematische Darstellung einer erfindungsgemäßen Schnittstellenvorrichtung und
- Figur 2: eine detailliertere Darstellung der Schnittstellenvorrichtung von Figur 1.

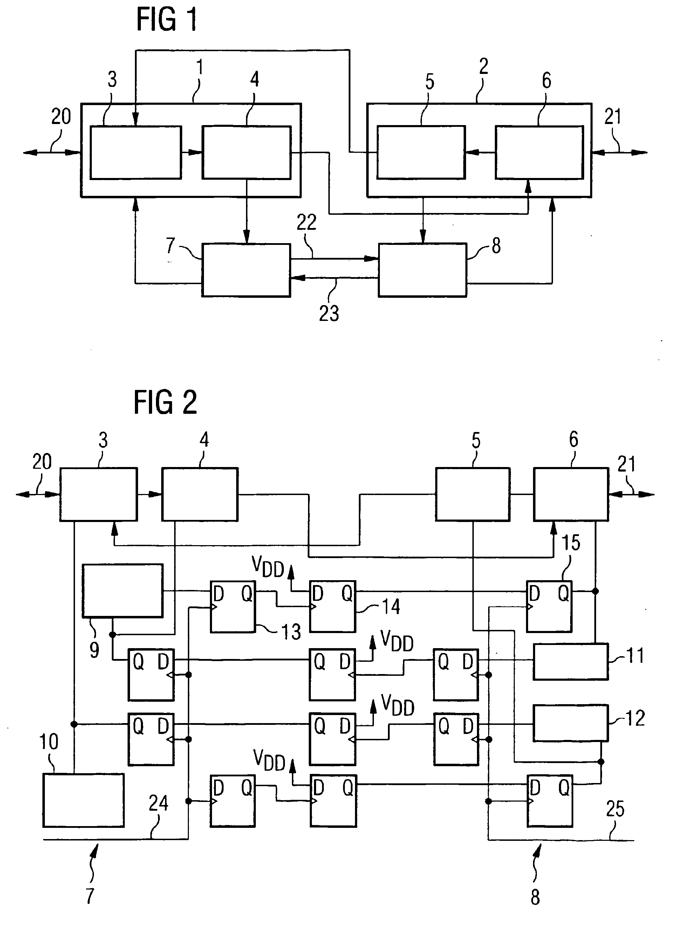

In der Figur 1 ist eine erfindungsgemäße Schnittstellenvorrichtung gezeigt. Diese besitzt eine erste Zwischenspeichereinheit 1 und eine zweite Zwischenspeichereinheit 2, wobei jede der Zwischenspeichereinheiten 1 und 2 einer Domäne zugeordnet ist. Aufgabe der Schnittstellenvorrichtung ist es, eine Datenübertragung von einer Domäne zur anderen Domäne zu ermöglichen. Insbesondere soll der Datenaustausch zwischen Domänen mit asynchronen Takten bewerkstelligt werden.

Zu Erläuterung der Funktionsweise wird angenommen, daß Daten 20 von einer ersten Domäne zur zweiten Domäne übertragen werden sollen. Die der Zwischenspeichereinheit 1 übergebenen Daten 20 werden zunächst in einen ersten Speicher 3 der ersten Zwischenspeichereinheit 1 geschrieben. Dies ist die erste Stufe der Zwischenspeichereinheit 1. Es wird nun angenommen, daß alle Übertragungsvorgänge abgeschlossen sind. Daher können die Daten gleichzeitig oder nachfolgend auch in den Speicher 4 der zweiten Stufe der Zwischenspeichereinheit 1 geschrieben werden. Eine Übertragung zur zweiten Zwischenspeichereinheit 2 erfolgt von dem zweiten Speicher 4 zu einem ersten Speicher 6 der zweiten Zwischenspeichereinheit 2. Aus dem ersten Speicher 6 der zweiten Zwischenspeichereinheit 2 können die Daten nun von der zweiten Domäne gelesen werden.

Das Lesen der Daten erfolgt aber erst, wenn die dazu notwendige Anzahl an Taktzyklen abgeschlossen ist. Wenn nun die zweite Domäne mit einer wesentlich geringeren Taktfrequenz arbeitet als die erste Domäne, dauert das Lesen der Daten aus dem Speicher 6 entsprechend lange. Wenn nun von der ersten Domäne weitere Daten 20 übertragen werden sollen und diese Daten direkt in den ersten Speicher 6 der zweiten Zwischenspeichereinheit 2 geschrieben würden, würden die Daten im ersten Speicher 6 überschrieben werden und es käme zu einem Übertragungsfehler wegen Datenverlust. Aus diesem Grund müssen die Daten in dem zweiten Speicher 4 der ersten Zwischenspeichereinheit 1 so lange gehalten werden, bis der Lesevorgang aus dem ersten Speicher 6 abgeschlossen ist. Dies erfolgt mit einer Taktsynchronisierung.

Es muß der ersten Zwischenspeichereinheit 1 also möglich sein, festzustellen, ob eine solche Taktsynchronisierung bereits erfolgt ist, bevor die Daten in dem zweiten Speicher 4 geändert werden. Dazu ist die erste Zwischenspeichereinheit 1 mit einer Synchronisationsvorrichtung 7 verbunden. Diese sendet ein Synchronisationssignal 22 an eine Synchronisationsvorrichtung 8, die der zweiten Zwischenspeichereinheit 2 zugeordnet ist. Die Synchronisationsvorrichtung 8 prüft daraufhin, ob eine Taktsynchronisation stattgefunden hat. Wenn dies der Fall ist, geht ein Bestätigungssignal 23 an die erste Synchronisationsvorrichtung 7. Diese gibt daraufhin das Schreiben vom ersten Speicher 3 in den zweiten Speicher 4 der ersten Zwischenspeichereinheit 1 frei.

Unabhängig davon, wie groß die Frequenzdifferenz zwischen den Taktfrequenzen der ersten und zweiten Domäne ist, ist in der beschriebenen Schnittstellenvorrichtung sichergestellt, daß es nicht zu Datenübertragungsfehlern aufgrund der unterschiedlichen Taktfrequenzen kommen kann.

Die Datenübertragung von der zweiten Domäne zur ersten Domäne erfolgt analog zur beschriebenen Übertragung von Daten von der ersten Domäne zur zweiten Domäne.

Durch die zweistufige Ausführung der Zwischenspeichereinheiten 1 und 2 kann die Schnittstellenvorrichtung bereits zu übertragende Daten aufnehmen, bevor der Übertragungsvorgang der zuvor zu übertragenden Daten abgeschlossen ist. Die gleichzeitige Nutzung der Schnittstellenvorrichtung durch beide Domänen ist möglich, wobei eine Seite Daten lesen, die andere Seite Daten schreiben kann.

Die Figur 2 zeigt eine detailliertere Darstellung der Schnittstellenvorrichtung von Figur 1. Insbesondere ist die Ausführung der Synchronisationsvorrichtungen 7 und 8 im Detail gezeigt. Die erste Synchronisationsvorrichtung 7 besitzt eine Vorrichtung 9 zur Generierung von Synchronisationssignalen und eine Vorrichtung 10 zur Generierung von Bestätigungssignalen. Der Ausgang der Vorrichtung zur Generierung von Synchronisationssignalen ist mit dem Eingang eines D-Flipflops verbunden. Der Takteingang dieses Flipflops ist mit einem Taktsignal 24 der ersten Domäne beaufschlagt. Am Ausgang Q wird das von der Vorrichtung 9 bereitgestellte Signal zu dem Zeitpunkt übernommen, wenn ein Taktsignal 24 von der ersten Domäne kommt. Der Ausgang Q dieses Flipflops ist mit dem Takteingang eines weiteren D-Flipflops verbunden, dessen Eingang mit der Betriebsspannung VDD verbunden ist. Aufgrund dieser Beschaltung erscheint am Ausgang Q das Ausgangssignal des vorigen Flipflops unmittelbar nach dessen Anliegen am Takteingang. Der Vorteil dieses Flipflops im Übergangsbereich zwischen den der ersten bzw. zweiten Domäne zugeordneten Bereichen besteht darin, daß Spitzen ausgefiltert werden. Das Ausgangssignal des zweiten Flipflops 14 liegt am Eingang eines dritten D-Flipflops 15 an. Dieses Eingangssignal wird auf dem Ausgang weitergeschaltet, wenn am Takteingang ein Taktimpuls der zweiten Domäne anliegt. Der Ausgang ist sowohl mit dem ersten Speicher 6 der ersten Zwischenspeichereinheit 2 als auch mit der Vorrichtung 11 zur Generierung eines Bestätigungssignals verbunden.

Nach erfolgter Taktsynchronisierung erzeugt die Vorrichtung 11 ein Bestätigungssignal, das in der gleichen Weise an die Vorrichtung 9 zur Generierung eines Synchronisationssignals zurückgesendet wird. Dabei kommen ebenfalls drei D-Flipflops zum Einsatz. Über eine Verbindung zwischen der ersten Synchronisationsvorrichtung 7 und dem ersten und zweiten Speicher 3 und 4 wird nun ein erneutes Schreiben in den zweiten Speicher 4 ermöglicht.

Bei der Übertragung von Daten 21 von der zweiten Domäne zur ersten Domäne erfolgt die Arbeitsweise der Synchronisationsvorrichtungen 7 und 8 in der gleichen Weise, wobei durch die Vorrichtung 12 ein Synchronisationssignal erzeugt und an die erste Synchronisationsvorrichtung 7 übertragen wird und durch die Vorrichtung 10 ein entsprechendes Bestätigungssignal erzeugt und zurückübertragen wird, wenn die Synchronisation erfolgt ist.

### Bezugszeichenliste

- 1: erste Zwischenspeichereinheit
- 2: zweite Zwischenspeichereinheit
- 3: erster Speicher
- 4: zweiter Speicher
- 5: zweiter Speicher
- 6: erster Speicher
- 7: erste Synchronisationsvorrichtung
- 8: zweite Synchronisationsvorrichtung
- 9: Vorrichtung zur Generierung eines Synchronisationssignals
- 10: Vorrichtung zur Generierung eines Bestätigungssignals
- 11: Vorrichtung zur Generierung eines Bestätigungssignals
- 12: Vorrichtung zur Erzeugung eines Synchronisationssignals
- 13: erstes Flipflop
- 14: zweites Flipflop
- 15: drittes Flipflop
- 20: Daten
- 21: Daten
- 22: Synchronisationssignal
- 23: Bestätigungssignal
- 24: Taktsignal der ersten Domäne
- 25: Taktsignal der zweiten Domäne

## Patentansprüche

1. Schnittstellenvorrichtung mit
einer ersten Zwischenspeichereinheit (1) und einer zweiten Zwischenspeichereinheit (2), wobei die erste Zwischenspeichereinheit einer ersten Domäne und die zweite Zwischenspeichereinheit einer zweiten Domäne zugeordnet ist, und wobei die Zwischenspeichereinheiten (1, 2) zur Datenübertragung miteinander verbunden sind, wobei
jede der Zwischenspeichereinheiten (1, 2) zweistufig mit jeweils einem ersten und einem zweiten Speicher (3, 6, 4, 5) ausgeführt ist,
wobei die Verbindung zwischen der ersten und der zweiten Zwischenspeichereinheit (1, 2) durch Verbindungen zwischen dem zweiten Speicher (4, 5) der einen Zwischenspeichereinheit (1, 2) und dem ersten Speicher (3, 6) der anderen Zwischenspeichereinheit (2, 1) vorgesehen ist, **dadurch gekennzeichnet, daß**
die Daten von einer Domäne in den ersten Speicher (3, 6) geschrieben werden und dann in den zweiten Speicher (4, 5) geschrieben werden, wenn kein Übertragungsvorgang zwischen den Domänen mehr anhängig ist.

2. Schnittstellenvorrichtung nach Anspruch 1,
**dadurch gekennzeichnet, daß**
jede Zwischenspeichereinheit (1, 2) eine Synchronisationsvorrichtung (7, 8) zugeordnet ist, die bei Änderung des ersten Speichers (3, 6) ein Synchronisationssignal an die andere Synchronisationsvorrichtung (8, 7) sendet und bei Empfang eines Bestätigungssignals (22) ein Schreiben in den zweiten Speicher (4, 5) freigibt, und die bei Empfang eines Synchronisationssignals (22) von der anderen Synchronisationsvorrichtung (8, 7) ein Bestätigungssignal (23) sendet, wenn eine Taktsignalsynchronisation erfolgt ist.

3. Schnittstellenvorrichtung nach Anspruch 2,
**dadurch gekennzeichnet, daß**
in den Verbindungsleitungen zwischen den Synchronisationsvorrichtungen (7, 8) Flipflops vorgesehen sind zur Unterdrückung von Spannungsspitzen.

4. Schnittstellenvorrichtung nach einem der Ansprüche 1 bis 3,
**dadurch gekennzeichnet, daß**
die Taktfrequenz einer Zwischenspeichereinheit (7, 8) mindestens doppelt so hoch ist wie die der anderen Zwischenspeichereinheit (8, 7).

## Claims

1. Interface apparatus having
a first buffer storage unit (1) and a second buffer storage unit (2), the first buffer storage unit being associated with a first domain and the second buffer storage unit being associated with a second domain, and the buffer storage units (1, 2) being connected to one another for the purpose of transmitting data,
each of the buffer storage units (1, 2) being of two-stage design and respectively having a first and a second memory (3, 6, 4, 5),
the first and second buffer storage units (1, 2) being connected by means of connections between the second memory (4, 5) in one buffer storage unit (1, 2) and the first memory (3, 6) in the other buffer storage unit (2, 1), **characterized in that**
the data from one domain are written to the first memory (3, 6) and then to the second memory (4, 5) when a transmission operation is no longer pending between the domains.

2. Interface apparatus according to Claim 1,
**characterized in that**
each buffer storage unit (1, 2) is associated with a synchronization apparatus (7, 8) which, when the first memory (3, 6) is changed, sends a synchronization signal to the other synchronization apparatus (8, 7) and, upon reception of an acknowledgement signal (22), enables writing to the second memory (4, 5), and which, upon reception of a synchronization signal (22) from the other synchronization apparatus (8, 7), sends an acknowledgement signal (23) when clock signal synchronization has been effected.

3. Interface apparatus according to Claim 2,
**characterized in that**
flip-flops are provided in the connecting lines between the synchronization apparatuses (7, 8) for the purpose of suppressing voltage spikes.

4. Interface apparatus according to one of Claims 1 to 3,
**characterized in that**
the clock frequency of one buffer storage unit (7, 8) is at least twice as high as that of the other buffer storage unit (8, 7).

## Revendications

1. Dispositif d'interface comprenant :
une première unité (1) de mémoire intermédiaire et une deuxième unité (2) de mémoire intermédiaire, la première unité de mémoire intermédiaire étant associée à un premier domaine et la deuxième unité de mémoire intermédiaire a un deuxième domaine et les unités (1, 2) de mémoire intermédiaire étant reliées entre elles pour la transmission de données, dans lequel
chacune des unités (1, 2) de mémoire intermédiaire est réalisée en deux étages en ayant respectivement une première et une deuxième mémoire (3, 6, 4, 5),
dans lequel la liaison entre la première et la deuxième unité (1, 2) de mémoire intermédiaire est prévue par des liaisons entre la deuxième mémoire (4, 5) de l'une des unités (1, 2) de mémoire intermédiaire et la première mémoire (3, 6) de l'autre des unités (2, 1) de mémoire intermédiaire,
**caractérisé en ce que**
les données d'un domaine sont écrites dans la première mémoire (3, 6) et ensuite dans le deuxième mémoire (4, 5) s'il n'y a plus d'opération de transmission entre les domaines en instance.

2. Dispositif d'interface suivant la revendication 1, **caractérisé en ce que** chaque unité (1, 2) de mémoire intermédiaire est associée un dispositif (7, 8) de synchronisation qui, lorsque la première mémoire (3, 6) se modifie, émet un signal de synchronisation vers l'autre dispositif (8, 7) de synchronisation et à réception d'un signal (22) d'actionnement libère une écriture dans la deuxième mémoire (4, 5) et qui à réception de signal (22) de synchronisation de l'autre dispositif (8, 7) de synchronisation envoie un signal (23) d'actionnement lorsqu'une synchronisation de signal d'horloge est effectuée.

3. Dispositif d'interface suivant la revendication 2, **caractérisé en ce que**
il est prévu dans les lignes de liaison entre les dispositifs (7, 8) de synchronisation des bascules pour la suppression de pointes de tension.

4. Dispositif d'interface suivant l'une des revendications 1 à 3, **caractérisé en ce que**
la fréquence d'horloge d'une unité (7, 8) de mémoire intermédiaire est au moins deux fois plus grande que celle de l'autre unité (8, 7) de mémoire intermédiaire.
